# EUROPÄISCHE PATENTSCHRIFT

(11) **EP 1 551 524 B1**
(45) Veröffentlichungstag und Bekanntmachung des Hinweises auf die Patenterteilung: **25.03.2009**
(21) Anmeldenummer: 03792016.2
(22) Anmeldetag: 26.08.2003
(51) Int. Cl.: B01D 11/04, B01J 19/18

(54) **VERFAHREN UND VORRICHTUNG ZUM EXTRAHIEREN VON STOFFEN AUS FLÜSSIGKEITEN ODER FESTSTOFFDISPERSIONEN**
METHOD AND DEVICE FOR THE EXTRACTION OF MATERIALS FROM LIQUIDS OR SOLID DISPERSIONS
PROCEDE ET DISPOSITIF D'EXTRACTION DE SUBSTANCES CONTENUES DANS DES LIQUIDES OU DISPERSIONS DE MATIERES SOLIDES

(30) Priorität: 26.08.2002 AT 12742002
(43) Veröffentlichungstag der Anmeldung: 13.07.2005
(73) Patentinhaber: NATEX Prozesstechnologie GesmbH, A-2630 Ternitz (AT)
(72) Erfinder: SEIDLITZ, Helmut, A-2630 Ternitz (AT); LACK, Eduard, A-2700 Wiener Neustadt (AT)
(74) Vertreter: Haffner, Thomas M.
(86) Internationale Anmeldenummer: PCT/AT2003/000246
(87) Internationale Veröffentlichungsnummer: WO 2004/018070

(56) Entgegenhaltungen:
- DE-A- 2 922 645
- GB-A- 735 422
- SU-A- 512 772
- US-A- 2 474 006
- US-A- 4 668 398

## Beschreibung

Die Erfindung bezieht sich auf ein Verfahren zum Extrahieren von Inhaltsstoffen, insbesondere Verunreinigungen, aus Flüssigkeiten oder Feststoffdispersionen unter Verwendung von komprimierten Extraktionsmitteln, wie zum Beispiel überkritischem oder flüssigem Kohlendioxid, sowie auf eine Vorrichtung zur Durchführung dieses Verfahrens.

Die SU 512772 A zeigt und beschreibt einen Mischer mit einer Einrichtung zur Verbesserung des intensiven Wärmeaustauschs zwischen den zu mischenden Substanzen. Zu diesem Zweck ist der Mischer mit einem von Kühl- oder Heizmittel durchströmten Mantel umgeben und verfügt über rotierende Schaufeln, welche die miteinander zu vermischenden Komponenten nahe der beheizten oder gekühlten Wand des Mischers auch mechanisch intensiv miteinander vermischen. Das Gemisch wird über einen gemeinsamen Anschluss ausgetragen.

Die Extraktion mit überkritischen Gasen wird bereits seit mehr als 20 Jahren im industriellen Maßstab eingesetzt. Hauptanwendungen sind hier die diskontinuierliche Verarbeitung von Feststoffen in der Lebensmittelindustrie. Es wurden auch bereits kontinuierliche Verfahren zur Auftrennung von Flüssigkeiten mit überkritischen Gasen vorgeschlagen, wobei der Einsatzbereich unter Verwendung von Hochdruckkolonnen begrenzt ist auf Flüssigkeiten geringer Viskosität, ohne Feststoffanteil sowie keinerlei Neigung zur Schaumbildung oder Ausfällung von Feststoffen unter den angewandten Bedingungen. Bei Einsatz von viskosen Flüssigkeiten können Rührwerke eingesetzt werden, wobei eine möglichst intensive Vermischung von Lösungsmittel und zu extrahierender Flüssigkeit wesentlich ist und Flüssig-Flüssig-Extraktionen in der Regel eine Reihe von Hilfsstoffen erfordern, um die Viskosität der zu extrahierenden Flüssigkeiten entsprechend herabzusetzen. Die Abtrennung von Ölen aus Lecithin ist ein Beispiel für eine besonders aufwendige Extraktion. Um die mit Säulen verbundenen Schwierigkeiten zu vermeiden und sicherzustellen, dass das Extraktionsfluid auch bei höher viskosen Flüssigkeiten entsprechend intensiv mit der zu extrahierenden Flüssigkeit vermischt werden kann, wurden Sprühextraktionsverfahren vorgeschlagen, bei welcher das zu extrahierende Material in Form kleinster Tröpfchen versprüht mit dem überkritischem Fluid als Extraktionsmittel bzw. Lösungsmittel in Kontakt gebracht wurde. Um eine entsprechende Versprühbarkeit sicherzustellen sind aber zur Herabsetzung der Viskosität in der Regel höhere Temperaturen erforderlich, womit ein derartiges Verfahren bei temperaturempfindlichen Stoffen Grenzen findet. Dies gilt auch für Molekulardampfdestillationen, mit welchen Wertstoffe aus hochviskosen Medien abgetrennt werden können. Beim Versprühen neigen die Tröpfchen insbesondere dann, wenn es sich um relativ viskose Flüssigkeiten handelt, rasch zu neuerlichem Agglomerieren und das Lösungsmittel gelangt nur mit den Oberflächen derartiger Tröpfchen in einen hinreichend intensiven Kontakt. Es entsteht daher im Inneren der Tröpfchen rasch ein entsprechender Konzentrationsgradient, wobei bedingt durch die über den Radius nun mehr unterschiedliche chemische Zusammensetzung auch die Viskosität entsprechend variieren kann, sodass aus einem vergleichsweise harten Kern derartiger Tröpfchen keine wirksame Extraktion mehr erfolgt.

Die Erfindung zielt nun darauf ab den Einsatzbereich der Fluidextraktion auch auf bisher nur schwer extrahierbare Medien auszudehnen und insbesondere die Verarbeitung von strukturviskosen Medien zu ermöglichen und die Möglichkeit zu schaffen, Rohstoffe mit relativ hohem Feststoffanteil zu verarbeiten. Insbesondere die Extraktion von dispersen Systemen mit hohem Feststoffanteil ist mit Sprühverfahren ohne die Gefahr einer Verstopfung von Düsen kaum möglich. Auch leicht schäumende Produkte sollen mit dem erfindungsgemäßen Verfahren verarbeitet werden können und es soll im Verfahren die Möglichkeit bestehen den gegebenenfalls gebildeten Schaum zu zerstören.

Zur Lösung dieser Aufgabe besteht das erfindungsgemäße Verfahren der eingangs genannten Art im wesentlichen darin, dass die Flüssigkeit bzw. Dispersion in einem druckfesten Reaktor als dünner Film aufgetragen wird und die Oberfläche des dünnen Filmes mit dem Extraktionsmittel, insbesondere Kohlendioxid, beaufschlagt wird, wobei die Oberfläche des dünnen Filmes durch mechanische Beaufschlagung der Flüssigkeit bzw. Dispersion über zumindest einen Teil der Schichtstärke des dünnen Filmes ständig erneuert wird. Dadurch, dass die Flüssigkeit bzw. Dispersion in einem druckfesten Reaktor als dünner Film aufgetragen wird, wird die erforderliche Oberfläche für den Angriff des Extraktionsmittels und den optimalen Massentransport in das komprimierte Extraktionsmittel dargeboten, wobei hier naturgemäß so wie bei der Extraktion von versprühten Tröpfchen eine Gefahr der Ausbildung eines Konzentrationsgradienten über die Dicke der Schichtstärke nicht von vornherein ausgeschlossen werden kann. Dadurch, dass aber nun gleichzeitig mit der Beaufschlagung des dünnen Filmes mit dem Extraktionsmittel die Oberfläche des dünnen Filmes durch mechanische Beaufschlagung der Flüssigkeit bzw. Dispersion ständig erneuert wird, gelingt es auf den Film Scherkräfte und Walkkräfte auszuüben, welche im Inneren des Filmes entsprechende Turbulenzen zur Folge haben und in der Folge jeweils immer neue Teilbereiche der Schichtstärke an die Oberfläche fördern. Es wird somit die dünne Schicht des Filmes mechanisch durchgearbeitet, wobei gleichzeitig mit derartigen mechanischen Einrichtungen die jeweils gewünschte Filmschichtstärke eingestellt werden kann. Insgesamt lässt sich somit die Verteilung der extrahierbaren Stoffe im Film durch die mechanische Beaufschlagung jeweils immer wiederum vergleichmäßigen und eine kontinuierliche optimale Vermischung innerhalb des Filmes sicherstellen, wobei gegebenenfalls entstehende Klumpen und Aggregate durch die mechanische Beaufschlagung zerstört werden können. In besonders vorteilhafter Weise erfolgt die Erneuerung der Oberfläche des dünnen Filmes mittels Wischern, Rollen oder Rakelmessern unter gleichzeitiger Einstellung der Schichtstärke, wodurch unmittelbar die gewünschte Walkarbeit und damit die im Inneren des Filmes erwünschte Turbulenz erzeugt wird.

Die erfindungsgemäße Vorrichtung zur Durchführung dieses Verfahrens weist einen druckfesten Reaktor mit wenigstens einer Aufgabeöffnung für die zu behandelnde Flüssigkeit bzw. Dispersion und das komprimierte Extraktionsmittel sowie entsprechende Austragsöffnungen auf, und ist im wesentlichen dadurch gekennzeichnet, dass die Aufgabeöffnung für die zu behandelnde Flüssigkeit bzw. Dispersion am Innenmantel des Reaktors mündet, und dass ein Rotor im Inneren des Reaktors angeordnet ist, dessen radiale Arme mit dem Flüssigkeits- bzw. Dispersionsfilm am Innenmantel des Reaktors zusammenwirken. Durch die Verwendung eines Reaktors, in dessen Inneren ein Rotor angeordnet ist, wird die Möglichkeit geschaffen die mechanische Einwirkung auch durch zusätzliches Einwirken von Zentrifugalkräften vorzunehmen, wobei eine entsprechende rasche Rotation zur Aufbringung der gewünschten Zentrifugalkraft erfolgen kann. Bei gleichzeitigem Einwirken derartiger Zentrifugalkräfte im Inneren des Reaktors können auch schäumende Produkte besonders vorteilhaft verarbeitet werden und gegebenenfalls gebildeter Schaum wirkungsvoll zerstört werden. Gleichzeitig bildet der Rotor die Werkzeuge für die mechanische Bearbeitung des dünnen Filmes, welche im einfachsten Fall von Wischern, Rollen, Rakelmessern oder dergleichen gebildet werden können. Mit Vorteil ist die Ausbildung hierbei so getroffen, dass die radialen Arme in Richtung der Rotationsachse verlaufende Stangen, Schaber, Wischer oder Rollen tragen. Derartige Stangen, Schaber, Wischer oder Rollen können naturgemäß auch zur Rotationsachse leicht geneigt verlaufen und dies insbesondere dann, wenn der Reaktor einen im wesentlichen trichterförmig konischen Innenmantel aufweist. Bevorzugt verlaufen die Stangen, Schaber, Wischer und/oder Rollen in im wesentlichen axialer Richtung, wenn ein im wesentlichen zylindrischer Reaktor eingesetzt wird.

Für den einfachen Antrieb des Rotors kann die Ausbildung mit Vorteil so getroffen sein, dass die Rotorwelle über eine Magnetkupplung mit einem Antrieb verbunden ist.

Um das der Extraktion zu unterwerfende Medium in einfacher Weise in einen derartigen Reaktor nahe der Innenoberfläche der Reaktorwand aufbringen zu können, ist die Ausbildung mit Vorteil so getroffen, dass die Aufgabeöffnung als radiale und axiale Bohrung in einem mit dem rohrförmigen Reaktor dichtend verbindbaren Deckel ausgebildet ist, wobei ein dichtender Abschluss in einfacher Weise dadurch gewährleistet werden kann, dass der Reaktor als Rohr mit an den Rohrenden anschließenden Flanschen ausgebildet ist, und dass die druckfest und dichtend anschließbaren Deckel an den Flanschen festlegbar sind.

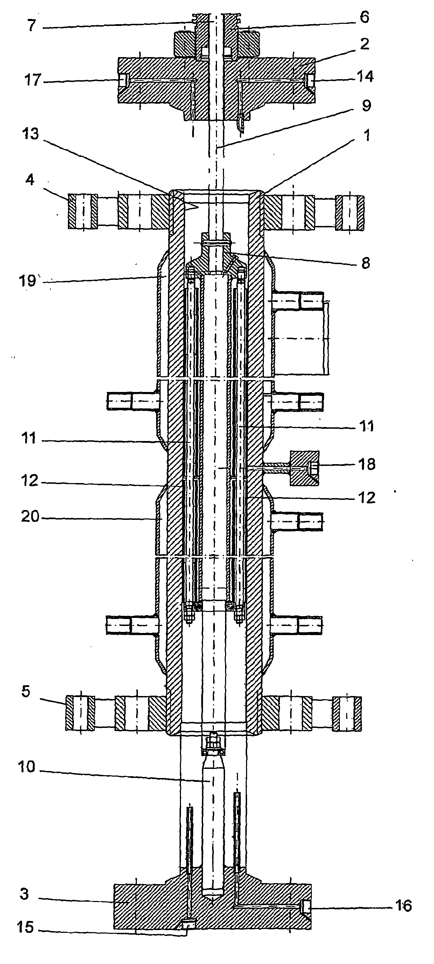

Die Erfindung wird nachfolgend anhand eines in der Zeichnung schematisch dargestellten Ausführungsbeispieles der erfindungsgemäßen Vorrichtung zur Durchführung des erfindungsgemäßen Verfahrens näher erläutert. In dieser ist mit 1 ein druckfester Reaktor bezeichnet, welcher zylinder- bzw. rohrförmig ausgebildet ist. Der Reaktor 1 kann mittels eines Deckelteiles 2 und eines Bodenteiles 3 druckfest verschlossen werden, wobei die Verbindung über die Flansche 4 und 5 erfolgt. Im Deckelteil 2 ist ein Rührwerk 6 angeordnet, welches eine Magnetkupplung zum rotierenden Antreiben einer Rührwerkswelle 7 aufweist. Die Rührwerkswelle 7 ist ihrerseits mit dem Rotor 8 verbunden, welcher im Inneren des Reaktors 1 um eine Rotationsachse 9 rotierbar gelagert ist. Die entsprechende Führung bzw. Zentrierung des Rotors erfolgt über einen Dorn 10, welcher mit dem Bodenteil 3 fest verbunden ist. Der Rotor 8 trägt mehrere kreisförmig verteilt angeordnete Führungsstangen 11, welche als Führung für drehbar gelagerte Rollen 12 dienen, sodass bei einer Rotation des Rotors 8 um die Drehachse 9 die Rollen 12 entlang des Innenumfanges 13 des Reaktors 1 abrollen können.

Im Deckel 2 ist nun eine Aufgabeöffnung 14 für die zu behandelnde Flüssigkeit bzw. Dispersion vorgesehen. Die Aufgabeöffnung mündet hierbei im Bereich des Innenumfanges 13 des Reaktor 1 in den zylinderförmigen Reaktorraum. Durch Einpressen der zu behandelnden Flüssigkeit bzw. Dispersion über die Aufgabeöffnung 14 wird die Flüssigkeit bzw. Dispersion nun im Inneren des Reaktors 1 in Richtung zur Austragsöffnung 15 gefördert, wobei die zu behandelnde Flüssigkeit bzw. Dispersion im ringförmigen Spalt zwischen Innenumfang 13 des Reaktors 1 und Außenumfang des Rotors nach unten gedrückt wird. In diesem Bereich wird die zu behandelnde Flüssigkeit bzw. Dispersion von den rotierenden Rollen 12 mechanisch beaufschlagt, sodass ein äußerst dünner Flüssigkeitsfilm zwischen den rotierenden Rollen 12 und dem Innenumfang 13 des Reaktors 1 ausgebildet wird. Die Dicke des Flüssigkeitsfilmes wird hierbei durch den voreingestellten Abstand der Rollen 12 zum Innenmantel 13 des Reaktors 1 bestimmt. Die Rollen 12 können eine schraubenlinienförmige Profilierung aufweisen, aber auch konisch, konkav oder konvex ausgeführt sein, wobei die Profilierung beim Abrollen entlang des Flüssigkeitsfilmes gleichzeitig eine Abwärtsbewegung des Flüssigkeitsfilmes in Richtung zur Austragsöffnung 15 begünstigt.

Im Gegenstrom zur zu behandelnden Flüssigkeit bzw. Dispersion wird nun ein Extraktionsmittel, vorzugsweise flüssiges oder überkritisches Kohlendioxid in den Reaktor eingeführt, wobei die entsprechende Aufgabeöffnung im Bodenteil 3 ausgebildet und mit 16 bezeichnet ist. Das Extraktionsmittel steigt im Inneren des Reaktors 1 auf und gelangt in intensiven Kontakt mit dem Flüssigkeitsfilm, wobei die dem Extraktionsmittel ausgesetzte Oberfläche des Flüssigkeitsfilmes durch den von den rotierenden Rollen 12 bewirkten Walk- bzw. Knetvorgang ständig erneuert wird. Das mit dem extrahierten Inhaltsstoff beladene Extraktionsmittel kann in der Folge über die im Deckel 2 vorgesehene Austrittsöffnung 17 abgezogen werden.

Ergänzend ist eine verschließbare Öffnung 18 vorgesehen, über welche während des Betriebes Proben entnommen oder verschiedene Betriebsparameter überprüft werden können. Eine weitere derartige Öffnung kann auch im Bodenteil 3 vorgesehen sein.

Der druckfeste Reaktor 1 ist weiters von Heiz- bzw. Kühlmänteln 19 und 20 umgeben, welche von einer Heiz- bzw. Kühlflüssigkeit und insbesondere Wasser im Gleich- oder Gegenstrom mit der zu behandelnden Flüssigkeit bzw. Dispersion durchströmt werden können.

## Patentansprüche

1. Verfahren zum Extrahieren von Inhaltsstoffen, insbesondere verunreinigungen, aus Flüssigkeiten oder Feststoffdispersionen unter Verwendung von komprimierten Extraktionsmitteln, wie zum Beispiel überkritischem oder flüssigem Kohlendioxid, **dadurch gekennzeichnet, dass** die Flüssigkeit bzw. Dispersion in einem druckfesten Reaktor als dünner Film aufgetragen wird und die Oberfläche des dünnen Filmes mit dem komprimierten Extraktionsmittel, insbesondere Kohlendioxid, im Gegenstrom beaufschlagt wird, wobei die Oberfläche des dünnen Filmes durch mechanische Beaufschlagung der Flüssigkeit bzw. Dispersion über zumindest einen Teil der Schichtstärke des dünnen Filmes ständig erneuert wird und die Flüssigkeit gesondert vom komprimierten Extraktionsmitteln ausgetragen wird.

2. Verfahren nach Anspruch 1, **dadurch gekennzeichnet, dass** die Erneuerung der Oberfläche des dünnen Filmes mittels Wischern, Rollen oder Rakelmessern unter gleichzeitiger Einstellung der Schichtstärke erfolgt.

3. Vorrichtung zum Extrahieren von Inhaltsstoffen, insbesondere Verunreinigungen, aus Flüssigkeiten oder Feststoffdispersionen unter Verwendung von komprimierten Extraktionsmitteln, wie zum Beispiel überkritischem oder flüssigem Kohlendioxid, mit einem druckfesten Reaktor (1) mit wenigstens je einer Aufgabeöffnung (14) für die zu behandelnde Flüssigkeit bzw. Dispersion und das komprimierte Extraktionsmittel (16) sowie entsprechenden Austragsöffnungen (15,17), **dadurch gekennzeichnet, dass** die Aufgabeöffnung (14) für die zu behandelnde Flüssigkeit bzw. Dispersion am Innenmantel (13) des Reaktors (1) mündet so dass die Flüssigkeit bzw. Dispersion am Innenmantel als dünner Film aufgetragen wird, und dass ein Rotor (8) im Inneren des Reaktors (1) angeordnet ist, dessen radiale Arme mit dem Flüssigkeits- oder Dispersionsfilm am Innenmantel (13) des Reaktors (1) zusammenwirken und dass die Aufgabeöffnung für die zu behandelnde Flüssigkeit bzw. Dispersion und die Aufgabeöffnung für das komprimierte Extraktionsmittel in einander gegenüberliegenden Seiten des Reaktors in den Reaktor mündet.

4. Vorrichtung nach Anspruch 3, **dadurch gekennzeichnet, dass** die radialen Arme in Richtung der Rotationsachse (9) verlaufende Stangen (11), Schaber, Wischer oder Rollen (12) tragen.

5. Vorrichtung nach Anspruch 3 oder 4, **dadurch gekennzeichnet, dass** der Reaktor (1) einen im wesentlichen zylindrischen oder trichterförmig konischen Innenmantel (13) aufweist.

6. Vorrichtung nach einem der Ansprüche 3, 4 oder 5, **dadurch gekennzeichnet, dass** die Rotorwelle (7) über eine Magnetkupplung mit einem Antrieb (6) verbunden ist.

7. Vorrichtung nach einem der Ansprüche 3 bis 5, **dadurch gekennzeichnet, dass** die Aufgabeöffnung (14) als radiale und axiale Bohrung in einem mit dem rohrförmigen Reaktor (1) dichtend verbindbaren Deckel (2) ausgebildet ist.

8. Vorrichtung nach einem der Ansprüche 3 bis 7, **dadurch gekennzeichnet, dass** der Reaktor (1) als Rohr mit an den Rohrenden anschließenden Flanschen (4,5) ausgebildet ist und dass die druckfest und dichtend anschließbaren Deckel (2,3) an den Flanschen (4,5) festlegbar sind.

## Claims

1. A method for extracting components, particularly impurities, from liquids or solids dispersions by using compressed extraction agents such as, for instance, supercritical or liquid carbon dioxide, **characterized in that** the liquid or dispersion is applied as a thin film in a pressure-tight reactor and the surface of the thin film is treated in countercurrent with the extraction agent, particularly carbon dioxide, whereby the surface of the thin film is constantly renewed over at least a portion of the layer thickness of the thin film by mechanically acting on said liquid or dispersion and the liquid is discharged separately from the compressed extraction agents.

2. A method according to claim 1, **characterized in that** the renewal of the surface of the thin film is effected by the aid of wipers, rollers or doctor blades, while simultaneously adjusting the layer thickness.

3. A device for extracting components, particularly impurities, from liquids or solids dispersions by using compressed extraction agents such as, for instance, supercritical or liquid carbon dioxide, including a pressure-tight reactor (1) having at least one charging opening (14) for the liquid or dispersion to be treated and for the compressed extraction agent (16) as well as appropriate discharge openings (15, 17), **characterized in that** the charging opening (14) for the liquid or dispersion to be treated opens on the inner shell (13) of the reactor (1) so that the liquid or dispersion respectively is applied to the inner shell as a thin film, and that a rotor (8) is arranged in the interior of the reactor (1), the radial arms of said rotor cooperating with the liquid or dispersion film on the inner shell (13) of the reactor (1) and that the charging openings for the liquid or dispersion to the treated and the charging opening for the compressed extraction agent open into the reactor at opposite sides of the reactor.

4. A device according to claim 3, **characterized in that** said radial arms carry rods (11), scrapers, wipers or rollers (12) extending in the direction of the axis of rotation (9).

5. A device according to claim 3 or 4, **characterized in that** the reactor (1) has a substantially cylindrical or funnel-shaped conical inner shell (13).

6. A device according to any one of claims 3, 4 or 5, **characterized in that** the rotor shaft (7) is connected with a drive (6) via a magnetic coupling.

7. A device according to any one of claims 3 to 5, **characterized in that** the charging opening (14) is designed as a radial and axial bore provided in a lid (2) capable of being sealingly connected with the tubular reactor (1).

8. A device according to any one of claims 3 to 7, **characterized in that** the reactor (1) is designed as a tube including flanges (4, 5) connected to the tube ends, and that the lids (2, 3) capable of being connected in a pressure-tight manner and of being sealingly connected are attachable to the flanges (4, 5).

## Revendications

1. Procédé pour extraire de liquides ou de dispersions de matières solides, des substances contenues à l'intérieur, notamment des impuretés, moyennant l'utilisation de moyens d'extraction comprimés, comme par exemple du dioxyde de carbone surcritique ou liquide, **caractérisé en ce que** le liquide ou la dispersion est appliqué, sous forme d'un film mince, dans un réacteur résistant à la pression, et la surface libre du film mince est pressurisée, à contre-courant, avec le moyen d'extraction comprimé, notamment le dioxyde de carbone, la surface libre du film mince étant renouvelée continuellement par traitement mécanique du liquide ou de la dispersion, sur au moins une partie de l'épaisseur de couche du film mince, et le liquide étant évacué séparément des moyens d'extraction comprimés.

2. Procédé selon la revendication 1, **caractérisé en ce que** le renouvellement de la surface libre du film mince se fait au moyen d'organes d'essuyage, de rouleaux ou de lames de raclage, sous réglage simultané de l'épaisseur de couche.

3. Dispositif pour extraire de liquides ou de dispersions de matières solides, des substances contenues à l'intérieur, notamment des impuretés, moyennant l'utilisation de moyens d'extraction comprimés, comme par exemple du dioxyde de carbone surcritique ou liquide, comprenant un réacteur (1) résistant à la pression, doté d'au moins une ouverture de chargement (14) respective pour le liquide ou la dispersion à traiter et le moyen d'extraction comprimé (16) ainsi que d'ouvertures d'évacuation correspondantes (15, 17), **caractérisé en ce que** l'ouverture de chargement (14) pour le liquide ou la dispersion à traiter débouche sur la surface latérale intérieure (13) du réacteur (1), de sorte que le liquide ou la dispersion est appliqué sur la surface latérale intérieure, sous forme d'un film mince, et **en ce qu'**à l'intérieur du réacteur (1), est disposé un rotor (8) dont des bras radiaux coopèrent avec le film de liquide ou de dispersion, présent sur la surface latérale intérieure (13) du réacteur (1), et **en ce que** l'ouverture de chargement pour le liquide ou la dispersion à traiter et l'ouverture de chargement pour le moyen d'extraction comprimé débouchent dans le réacteur sur des côtés opposés l'un à l'autre du réacteur.

4. Dispositif selon la revendication 3, **caractérisé en ce que** les bras radiaux portent des tiges (11), des racloirs, des organes d'essuyage ou des rouleaux (12), qui s'étendent suivant la direction de l'axe de rotation (9).

5. Dispositif selon la revendication 3 ou 4, **caractérisé en ce que** le réacteur (1) présente une surface latérale intérieure (13) pour l'essentiel cylindrique ou conique en forme d'entonnoir.

6. Dispositif selon l'une des revendications 3, 4 ou 5, **caractérisé en ce que** l'arbre (7) du rotor est relié à un entraînement (6) par l'intermédiaire d'un accouplement magnétique.

7. Dispositif selon l'une des revendications 3 à 5, **caractérisé en ce que** l'ouverture de chargement (14) est réalisée sous forme d'une forure radiale et axiale, dans un couvercle (2) susceptible d'être réuni, de façon étanche, au réacteur (1) de forme tubulaire.

8. Dispositif selon l'une des revendications 3 à 7, **caractérisé en ce que** le réacteur (1) est réalisé sous forme d'un tube, avec des collerettes (4, 5) se raccordant aux extrémités du tube, et **en ce que** les couvercles (2, 3), susceptibles d'un raccordement résistant à la pression et étanche, peuvent être fixés aux collerettes (4, 5).
